# EUROPÄISCHE PATENTANMELDUNG

(11) **EP 3 858 569 A1**
(43) Veröffentlichungstag der Anmeldung: **04.08.2021**
(21) Anmeldenummer: 20154140.6
(22) Anmeldetag: 28.01.2020
(51) Int. Cl.: B28D 5/04

(54) **VERFAHREN ZUM ABTRENNEN EINER VIELZAHL VON SCHEIBEN VON WERKSTÜCKEN MITTELS EINER DRAHTSÄGE WÄHREND EINER ABFOLGE VON ABTRENNVORGÄNGEN**

(71) Anmelder: Siltronic AG, 81677 München (DE)
(72) Erfinder: Pietsch, Georg, 84489 Burghausen (DE); Wiesner, Peter, 84367 Reut (DE)
(74) Vertreter: Staudacher, Wolfgang

(57) **Zusammenfassung**

Verfahren zum Abtrennen einer Vielzahl von Scheiben von Werkstücken mittels einer Drahtsäge während einer Abfolge von Abtrennvorgängen, die in Initialschnitte und erste und zweite Folgeschnitte untergliedert sind, wobei die Drahtsäge ein Drahtgatter aus sich bewegenden Drahtabschnitten eines Sägedrahts und eine Stellvorrichtung umfasst, und das Drahtgatter in einer Ebene zwischen zwei Drahtführungsrollen gespannt ist, wobei jede der zwei Drahtführungsrollen zwischen einem Festlager und einem Loslager gelagert ist, das Verfahren umfassend
während eines jeden der Abtrennvorgänge mittels der Stellvorrichtung das Zustellen des jeweiligen Werkstücks durch das Drahtgatter entlang einer Zustellrichtung senkrecht zu einer Werkstückachse und senkrecht zur Ebene des Drahtgatters in Gegenwart einer Arbeitsflüssigkeit und von Hartstoffen, die abrasiv auf das Werkstück einwirken, gekennzeichnet durch
während eines jeden der Abtrennvorgänge das oszillierende axiale Bewegen der Loslager der zwei Drahtführungsrollen; und
das Zustellen des Werkstücks durch das Drahtgatter unter gleichzeitigem Verschieben des Werkstücks entlang der Werkstückachse mittels eines Stellelements gemäß der Vorgabe eines Korrekturprofils, das eine oszillierende Komponente umfasst, die der Wirkung entgegengerichtet ist, die das axiale Bewegen der Loslager auf die Form der abgetrennten Scheiben hat.

## Beschreibung

Gegenstand der Erfindung ist ein Verfahren zum Abtrennen einer Vielzahl von Scheiben von Werkstücken mittels einer Drahtsäge während einer Abfolge von Abtrennvorgängen, wobei die Drahtsäge ein Drahtgatter aus sich bewegenden Drahtabschnitten eines Sägedrahts und eine Stellvorrichtung umfasst, und das Drahtgatter in einer Ebene zwischen zwei Drahtführungsrollen gespannt ist, wobei jede der zwei Drahtführungsrollen zwischen einem Festlager und einem Loslager gelagert ist.

### Stand der Technik

Für viele Anwendungen werden dünne, gleichförmige Scheiben eines Materials benötigt. Ein Beispiel für Scheiben, an die besonders hohe Anforderungen bezüglich Gleichförmigkeit und Planparallelität ihrer jeweiligen Vorder- und Rückseiten gestellt werden, sind Halbleiterscheiben, die als Substrate zur Fertigung mikroelektronischer Bauelemente verwendet werden.

Im Verlauf des Abtrennens von Scheiben mittels einer Drahtsäge wird eine Vielzahl von Scheiben gleichzeitig von einem Werkstück abgetrennt. Dazu wird Sägedraht spiralförmig so um mindestens zwei Drahtführungsrollen herumgeführt, dass auf der dem zu zertrennenden und mit einer Halteleiste verklebten Werkstück zugewandten Seite zweier benachbarter Drahtführungsrollen ein Drahtgatter aus parallel zueinander verlaufenden Abschnitten des Sägedrahts aufgespannt wird. Die Drahtführungsrollen weisen die Form gerader Kreiszylinder auf, die Achsen dieser Kreiszylinder sind parallel zueinander angeordnet, und die Mantelflächen der Drahtführungsrollen besitzen einen Belag aus einem verschleißresistenten Material, der mit ringförmig geschlossenen und in Ebenen senkrecht zur Drahtführungsrollenachse verlaufenden Rillen versehen ist, die den Sägedraht führen.

Gleichsinniges Drehen der Drahtführungsrollen um ihre Zylinderachsen bewirkt eine Bewegung der Drahtabschnitte des Drahtgatters relativ zum Werkstück, und mittels In-Kontakt-Bringens von Werkstück und Drahtgatter unter Anwesenheit eines Abrasivs bewirken die Drahtabschnitte einen Materialabtrag. Durch fortgesetztes Zustellen des Werkstücks bilden die Drahtabschnitte Trennspalte im Werkstück aus und arbeiten sich durch das Werkstück hindurch, bis sie alle in der Halteleiste zu liegen kommen. Das Werkstück ist dann in eine Vielzahl gleichförmiger Scheiben zertrennt, die wie Zinken eines Kamms mittels der Klebefuge an der Halteleiste hängen. Drahtsägen und Verfahren zum Drahtsägen sind beispielsweise aus der DE 10 2016 211 883 A1 oder der DE 10 2013 219 468 A1 bekannt.

Drahtsägen kann mittels Trennläppen (lap slicing) oder Trennschleifen (grind slicing) erfolgen.

Beim Trennläppen wird dem zwischen Drahtoberfläche und Werkstück gebildeten Arbeitsraum Arbeitsflüssigkeit in Form einer Aufschlämmung (slurry) aus Hartstoffen in einem flüssigen Trägermedium zugeführt. Der Materialabtrag erfolgt beim Trennläppen mittels einer Dreikörper-Wechselwirkung aus Werkzeugträger (Sägedraht), Werkzeug (Abrasiv) und Werkstück.

Beim Trennschleifen wird Sägedraht verwendet, in dessen Oberfläche Hartstoffe fest eingebunden sind, und es wird eine Arbeitsflüssigkeit zugeführt, die selbst keine abrasiv wirkenden Stoffe enthält und als Kühlschmiermittel wirkt. Der Materialabtrag erfolgt beim Trennschleifen mittels Zweikörper-Wechselwirkung aus einem diamantbelegten Sägedraht als Werkzeug und dem Werkstück.

Der Sägedraht ist in der Regel ein Pianodraht aus beispielsweise hypereutektoidem perlitischem Stahl. Die Hartstoffe bestehen beim Trennläppen beispielsweise aus Siliciumcarbid (SiC) und beim Trennschleifen beispielsweise aus mittels Nickel- oder Kunstharz-Bindung oder durch Einrollen form- und kraftschlüssig mit der Drahtoberfläche verbundenem Diamant. Die Trägerflüssigkeit der Aufschlämmung beim Trennläppen ist beispielsweise ein Öl oder Glycol und das Kühlschmiermittel beim Trennschleifen ist beispielsweise Wasser mit einem Zusatz an Netzmittel oder viskositätsverändernden Additiven.

Beim Trennläppen wird glatter oder strukturierter Sägedraht verwendet, beim Trennschleifen nur glatter Sägedraht. Ein glatter Sägedraht besitzt die Form eines Kreiszylinders mit einer der Drahtlänge entsprechenden Höhe. Ein strukturierter Sägedraht ist ein glatter Draht, der auf seiner gesamten Länge mit einer Vielzahl von Ausbuchtungen und Einstülpungen in Richtungen senkrecht zur Drahtlängsrichtung versehen wurde. Ein Beispiel für einen glatten Sägedraht zum Trennläppen beschreibt die WO 13 053 622 A1, ein Beispiel für strukturierten Sägedraht zum Trennläppen die US 9 610 641 und ein Beispiel für einen glatten Sägedraht mit Diamantbelag zum Trennschleifen die US 7 926 478.

Das Abtrennen einer Vielzahl von Scheiben mittels Drahtsägen kann mit unidirektionaler oder reziproker Drahtbewegung erfolgen. Beim Arbeiten mit unidirektionaler Drahtbewegung wird der Sägedraht über die gesamte Dauer des Abtrennvorgangs in einer Drahtlängsrichtung aus einem ersten Vorrat an frischem Sägedraht hin zu einem zweiten Vorrat an verbrauchtem Sägedraht bewegt. Beim Drahtsägen mit reziproker (bidirektionaler) Drahtbewegung wird der Sägedraht während des Abtrennvorgangs mittels mindestens eines Paares von Richtungsumkehrungen bewegt, wobei ein Paar an Richtungsumkehrungen ein erstes Bewegen des Sägedrahts um eine erste Länge in eine erste Drahtlängsrichtung und ein zweites Bewegen des Sägedrahts um eine zweite Länge in eine zweite, der ersten genau entgegengesetzte Richtung umfasst.

Insbesondere kann das Drahtsägen mit reziproker Drahtbewegung eine Vielzahl derartiger Paare von Drahtrichtungsumkehrungen umfassen, wobei die erste Länge größer als die zweite Länge gewählt wird, so dass sich insgesamt der Vorrat während des Abtrennvorgangs vom ersten Vorrat an frischem Sägedraht zum zweiten Vorrat an verbrauchtem Sägedraht hin verlagert. Das letztgenannte Verfahren wird als Drahtsägen im Pilgerschritt (pilgrim mode slicing, wire-reciprocating slicing) bezeichnet.

Erster und zweiter Vorrat werden in der Regel auf dafür vorgesehenen Spulen aufgewickelt bzw. davon abgewickelt. Der Sägedraht kann beim Drahtsägen im Pilgerschritt beim ersten Bewegen in die erste Drahtlängsrichtung dem Drahtgatter mit einer ersten Zugkraft zugeführt werden, die verschieden ist von der zweiten Zugkraft, mit der der Sägedraht auf der Spule für frischen Sägedraht aufgewickelt ist, und nach Durchlaufen des Drahtgatters der Spule für gebrauchten Sägedraht mit einer dritten Zugkraft zugeführt werden, die verschieden ist von der ersten Zugkraft. Die zweite Zugkraft, mit der der Sägedraht auf der Spule für frischen Sägedraht aufgewickelt ist und die dritte Zugkraft, mit der der Sägedraht auf der Spule für gebrauchten Sägedraht aufgewickelt wird, sind in der Regel geringer als die erste Zugkraft, mit der der Sägedraht dem Drahtgatter zugeführt wird. Dieses Vorgehen wird auch als Zugkraftreduzierung bezeichnet. Eine geringere Wickelspannung des Sägedrahts auf den Spulen vermeidet, dass sich der Sägedraht in die Spulenwicklung eingräbt, verklemmt und es deswegen zu Drahtrissen kommt.

Das Drahtsägen im Pilgerschritt kann darüber hinaus so durchgeführt werden, dass der frische Sägedraht beim ersten Bewegen in die erste Richtung um die erste Länge dem Drahtgatter mit einer ersten Zugkraft in Drahtlängsrichtung zugeführt wird und der gebrauchte Sägedraht beim zweiten Bewegen in die zweite Richtung um die zweite Länge dem Drahtgatter mit einer weiteren Zugkraft in Drahtlängsrichtung zugeführt wird, wobei die weitere Zugkraft geringer als die erste Zugkraft gewählt wird. Das wirkt Drahtrissen entgegen, da die maximale Zugkraft des durch Verschleiß dünneren gebrauchten Sägedrahts geringer ist als die des dickeren frischen Sägedrahts.

Bei üblichen Drahtsägen ist jede der Drahtführungsrollen jeweils in der Nähe einer ihrer Stirnflächen mit einem Lager versehen, das fest mit dem Maschinenrahmen verbunden ist und als Festlager bezeichnet wird, und in der Nähe der gegenüberliegenden Stirnfläche mit einem Lager, das in Achsrichtung der Drahtführungsrolle relativ zum Maschinenrahmen beweglich ist und als Loslager bezeichnet wird.

Insbesondere im Moment des ersten Kontakts des Drahtgatters mit dem Werkstück, also beim Einsägen (cut-in) kommt es zu einem abrupten mechanischen und thermischen Lastwechsel. Die Anordnung von Drahtgatter und Werkstück zueinander verändert sich, und die Komponente dieser Veränderung in Richtung der Drahtführungsrollenachse führt dazu, dass die Trennspalte, deren Seiten Vorder- und Rückseite benachbarter Scheiben bilden, aus ihren Ebenen senkrecht zu den Drahtführungsrollenachsen abweichen, die Scheiben also wellig werden. Wellige Scheiben sind für anspruchsvolle Anwendungen ungeeignet.

Es sind Verfahren bekannt, die darauf abzielen, der Veränderung der Anordnung von Drahtgatter und Werkstück relativ zueinander während des Trennvorgangs entgegenzuwirken und so die Planparallelität der Hauptflächen der durch den Trennvorgang erhaltenen Scheiben zu verbessern.

Aus der US 5 377 568 ist ein Verfahren bekannt, bei dem die Position einer außen an der Drahtführungsrolle befindlichen Bezugsfläche parallel zu und in der Nähe von der Loslager-Stirnfläche relativ zum Maschinenrahmen gemessen wird und mittels Temperierung des Drahtführungsrollen-Innenraums eine thermische Längenzunahme oder Längenabnahme der Drahtführungsrolle bewirkt wird, bis die gemessen Positionsänderung der Bezugsfläche wieder ausgeglichen ist.

Aus JP 2003 145 406 A2 ist ein Verfahren bekannt, bei dem ein Wirbelstromsensor die Position einer Stelle außen an einer Drahtführungsrolle misst und nach Maßgabe dieser Positionsmessung die Temperatur des Kühlwassers, das das Innere der Drahtführungsrolle temperiert, geändert wird.

Aus KR 101 340199 B1 ist ein Verfahren bekannt, bei dem Drahtführungsrollen verwendet werden, die jeweils auf einer Hohlwelle drehbar gelagert sind, wobei die Hohlwelle in mehreren Abschnitten mit unterschiedlicher Temperatur erwärmt oder gekühlt und somit abschnittweise in Achsrichtung ausgedehnt oder zusammengezogen werden kann. Dadurch wird, zumindest für wenige Sektoren, die Länge der Drahtführungsrolle in Achsrichtung nichtlinear (ungleichförmig) geändert.

Aus US 2012/0240915 A1 ist ein Verfahren bekannt, bei dem Drahtführungsrollen verwendet werden, deren Innenraum und eines deren Lager, die die Drahtführungsrollen drehend lagern, unabhängig voneinander mittels einer Kühlflüssigkeit temperiert werden.

Aus WO 2013/079683 A1 ist ein Verfahren bekannt, bei dem zunächst die sich für verschiedene Temperaturen der Drahtführungsrollenlager ergebenden Formen von Scheiben gemessen und jede dieser Formen mit der jeweils zugehörigen Lagertemperatur gespeichert wird und dann im Folgeschnitt die Lagertemperatur ausgewählt wird, die am besten zur gewünschten Zielform passt.

Aus JP 11 165 251 A ist ein Verfahren bekannt, bei dem die Auslenkung der Drahtabschnitte des Drahtgatters in Richtung der Werkstückachse beispielsweise optisch (CCD-Zeile) detektiert und das Werkstück mittels beispielsweise eines piezoelektrischen Stellelements entsprechend axial verschoben wird.

Aus US 5 875 770 ist ein Verfahren bekannt, bei dem die Form von Scheiben eines Schnitts gemessen wird, durch Differenzbildung zu einer gewünschten Idealform der Scheiben eine schnitttiefen-abhängige Korrekturkurve berechnet wird und im folgenden Schnitt das Werkstück während des Trennvorgangs nach Maßgabe dieser Korrekturkurve in Achsrichtung relativ zum Drahtgatter verschoben wird.

Den bekannten Verfahren ist gemein, dass sie manche Probleme unberücksichtigt lassen, beispielsweise das Auftreten spontaner sprunghafter Änderungen der Scheibenform während eines Abtrennvorgangs und das Auftreten einer von Abtrennvorgang zu Abtrennvorgang veränderlichen Scheibenform entsprechend einer Drift und die Wirkung des thermischen und mechanischen Lastwechsels insbesondere in der Phase des Einschnitts in das Werkstück.

Die Aufgabe der vorliegenden Erfindung besteht darin, sich mit diesen Problemen auseinanderzusetzen, um Scheiben zugänglich zu machen, deren Form einer Zielform möglichst nahe kommt.

Die Aufgabe wird gelöst durch ein Verfahren zum Abtrennen einer Vielzahl von Scheiben von Werkstücken mittels einer Drahtsäge während einer Abfolge von Abtrennvorgängen, die in Initialschnitte und erste und zweite Folgeschnitte untergliedert sind, wobei die Drahtsäge ein Drahtgatter aus sich bewegenden Drahtabschnitten eines Sägedrahts und eine Stellvorrichtung umfasst, und das Drahtgatter in einer Ebene zwischen zwei Drahtführungsrollen gespannt ist, wobei jede der zwei Drahtführungsrollen zwischen einem Festlager und einem Loslager gelagert ist, das Verfahren umfassend
während eines jeden der Abtrennvorgänge mittels der Stellvorrichtung das Zustellen des jeweiligen Werkstücks durch das Drahtgatter entlang einer Zustellrichtung senkrecht zu einer Werkstückachse und senkrecht zur Ebene des Drahtgatters in Gegenwart einer Arbeitsflüssigkeit und von Hartstoffen, die abrasiv auf das Werkstück einwirken, gekennzeichnet durch
während eines jeden der Abtrennvorgänge das oszillierende axiale Bewegen der Loslager der zwei Drahtführungsrollen; und
das Zustellen des Werkstücks durch das Drahtgatter unter gleichzeitigem Verschieben des Werkstücks entlang der Werkstückachse mittels eines Stellelements gemäß der Vorgabe eines Korrekturprofils, das eine oszillierende Komponente umfasst, die der Wirkung entgegengerichtet ist, die das axiale Bewegen der Loslager auf die Form der abgetrennten Scheiben hat.

Scheiben, die nach dem erfindungsgemäßen Verfahren von einem Werkstück abgetrennt werden, sind nahezu unbeeinflusst durch axiale Bewegungen von Werkstück und Drahtgatter relativ zueinander. Infolgedessen ist die Formabweichung solcher Scheiben von einer Referenzscheibe minimiert.

Die Erfindung wird daher vorzugsweise zur Herstellung von Halbleiterscheiben eingesetzt, insbesondere zur Herstellung von Scheiben aus einkristallinem Silicium.

Das Stellelement zum Verschieben des Werkstücks entlang der Werkstückachse kann piezoelektrisch, hydraulisch, pneumatisch, elektromechanisch oder thermisch, also unter Nutzung von Wärmeausdehnung arbeiten. Bevorzugt wird ein geregeltes piezomechanisches Stellelement verwendet, weil es eine last- und kriechfreie vorgabengemäße Positionierung mittels geschlossener Regelung aus Piezo-Aktuatorik und Positions-Sensorik ermöglicht und die Regelung im relevanten Stellbereich weniger Mikrometer besonders genau und zuverlässig ist.

Das oszillierende axiale Bewegen der Loslager kann durch Temperieren der Festlager mittels einer Kühlflüssigkeit bewirkt werden, indem die Kühlflüssigkeit einer Vielzahl an Paaren von Wechseln aus Kühlen und Erhitzen relativ zu einer mittleren Temperatur unterzogen wird. Das oszillierende axiale Bewegen der Loslager kann alternativ auch mittels weiterer Stellelemente bewirkt werden, die an den Festlagern eingreifen und piezoelektrisch, hydraulisch, pneumatisch oder elektromechanisch arbeiten.

Das Temperieren der Festlager in dieser Weise führt zu einer Kontraktion oder Ausdehnung der Festlager und damit von deren Komponenten in Achsrichtung der Drahtführungsrollen, was ein axiales Verschieben der Loslager und so ein Verschieben der Drahtführungsrollen relativ zum Werkstück zur Folge hat. Die Wechsel aus Paaren von Festlager-Kühlung und -Erhitzen erfolgen durch Einflussnahme auf den Kühlflüssigkeits-Kreislauf der Festlager. Die Wechsel erfolgen einerseits zeitlich ausreichend langsam, dass sie aufgrund der thermischen Trägheit der Festlager-Temperierung zu Verschiebungen des Loslagers von einigen Mikrometern führen, andererseits jedoch ausreichend schnell, dass während des Durchtritts des Werkstücks durch das Drahtgatter, also vom Einschnitt der Drahtabschnitte in das Werkstück bis zum Erreichen der Gesamtschnitttiefe entsprechend des Durchmessers des Werkstücks, mindestens 10 Wechsel bestehend aus Kühlen und Erhitzen stattfinden.

Die Temperatur des Kühlmittels wird mit einer Amplitude relativ zu einer mittleren Temperatur geändert, die vorgegeben wird. Aufgrund der thermischen Trägheit der Festlager-Temperierung sind bei geringeren Temperaturänderungen mehr Wechsel möglich, als bei größeren Temperaturänderungen. Dementsprechend ist das Temperatur-Bandbreiten-Produkt begrenzt und beträgt vorzugsweise nicht weniger als 0,025 °C/min und nicht mehr als 4 °C/min, besonders bevorzugt nicht weniger als 0,1 °C/min und nicht mehr als 1 °C/min. Das Temperatur-Bandbreiten-Produkt ist das Produkt der Amplitude der Temperaturänderung und des Kehrwerts der Zeitabstände der Wechsel. Die Amplitude der Temperaturänderung relativ zur mittleren Temperatur beträgt vorzugsweise nicht weniger als 0,5 °C und nicht mehr als 10 °C.

Während eines jeden der Initialschnitte der Abfolge von Abtrennvorgängen erfolgt das axiale Verschieben des Werkstücks nach Vorgabe des Korrekturprofils, wobei das Korrekturprofil vorzugsweise nur die oszillierende Komponente umfasst, oder nach Vorgabe des Korrekturprofils, wobei das Korrekturprofil vorzugsweise die oszillierende Komponente und eine erste formprofilbezogene Komponente umfasst, die proportional zur Differenz eines ersten Durchschnittsformprofils und des Formprofils einer Referenzscheibe ist, und das erste Durchschnittsformprofil von Scheiben bestimmt wird, die im Verlauf eines oder mehrerer Initialschnitte einer vorausgegangenen Abfolge von Abtrennvorgängen abgetrennt wurden.

Während eines jeden der ersten Folgeschnitte erfolgt das axiale Verschieben des Werkstücks nach Vorgabe des Korrekturprofils, wobei das Korrekturprofil vorzugsweise die oszillierende Komponente und eine zweite formprofilbezogene Komponente umfasst, die proportional zur Differenz eines zweiten Durchschnittsformprofils und des Formprofils der Referenzscheibe ist, und das zweite Durchschnittsformprofil von Scheiben bestimmt wird, die im Verlauf eines oder mehrerer der Initialschnitte der Abfolge abgetrennt wurden.

Während eines jeden der zweiten Folgeschnitte erfolgt das axiale Verschieben des Werkstücks nach Vorgabe des Korrekturprofils, wobei das Korrekturprofil vorzugsweise die oszillierende Komponente und eine dritte formprofilbezogene Komponente umfasst, die proportional zur Differenz eines dritten Durchschnittsformprofils und des Formprofils der Referenzscheibe ist, und das dritte Durchschnittsformprofil von Scheiben bestimmt wird, die von mindestens 1 bis 5 Abtrennvorgängen stammen, die dem jeweiligen zweiten Folgeschnitt der Abfolge unmittelbar vorausgegangen sind.

Das Bestimmen des ersten, zweiten und des dritten Durchschnittsformprofils kann auf einer scheibenbezogenen Auswahl von Scheiben basierend durchgeführt werden. Bei einer scheibenbezogenen Auswahl werden bestimmte Scheiben eines Abtrennvorgangs zur Bestimmung des jeweiligen Durchschnittsformprofils durch Mittelwertbildung herangezogen und andere ausgeschlossen. Beispielsweise werden nur solche Scheiben bei der Mittelwertbildung berücksichtigt, die eine bestimmte Lage im Werkstück haben, etwa nur jede 15te bis 25te Scheibe entlang der Werkstückachse.

Eine weitere Möglichkeit der scheibenbezogenen Auswahl ist der Ausschluss von Scheiben mit der größten und der geringsten Abweichung des Formprofils vom Durchschnittsformprofil aller Scheiben des Abtrennvorgangs (sogenanntes gestütztes Mittel). Alternativ können auch Scheiben von der Mittelwertbildung ausgeschlossen werden, deren Formprofil vom Durchschnittsformprofil aller Scheiben des Abtrennvorgangs um mehr als 1 bis 2 Sigma abweicht.

Das Bestimmen des zweiten und dritten Durchschnittsformprofils kann stattdessen auch basierend auf einer schnittbezogenen Auswahl von Scheiben erfolgen. Bei einer schnittbezogenen Auswahl werden sämtliche Scheiben von mindestens einem Abtrennvorgang zur Bestimmung eines weiteren Durchschnittformprofils herangezogen und sämtliche Scheiben von mindestens einem anderen Abtrennvorgang davon ausgeschlossen.

Darüber hinaus kann das Bestimmen des zweiten und dritten Durchschnittformprofils basierend auf einer scheibenbezogenen und einer schnittbezogenen Auswahl durchgeführt werden. In diesem Fall wird mindestens einer der vorangegangenen Abtrennvorgänge ausgewählt und mindestens einer der vorangegangenen Abtrennvorgänge ausgeschlossen, und gleichzeitig werden von den ausgewählten Abtrennvorgängen jeweils bestimmte Scheiben ausgewählt und jeweils andere ausgeschlossen und die so insgesamt ausgewählten Scheiben zur Mittelwertbildung herangezogen.

Die oszillierende Komponente des Korrekturprofils wirkt der relativen Lageänderung von Drahtgatter und Werkstück zueinander, die durch das oszillierende Bewegen der Loslager ausgelöst wird, genau nach Betrag (Amplitude) und Ort (Schnitttiefe) entgegen und gleicht kurzwellige Modulationen im Formprofil genau aus, die bei Anwendung eines Korrekturprofils ohne oszillierende Komponente erzeugt würden. Definitionen, die für das Verständnis der vorliegenden Erfindung hilfreich sind, sowie Überlegungen und Beobachtungen, die zur Erfindung geführt haben, behandeln die nachfolgenden Abschnitte dieser Beschreibung.

Die Oberfläche einer Scheibe setzt sich zusammen aus den Hauptflächen und der Randfläche. Die Hauptflächen umfassen Vorderseite und Rückseite der Scheibe. Das Zentrum der Scheibe ist deren Massenschwerpunkt. Eine Scheibe kann vermessen werden, indem sie entlang ihrer Ausgleichsebene zwischen einem Paar Sensoren, deren Verbindungslinie senkrecht zur Ausgleichsebene angeordnet ist, hindurchgeschoben wird und jeder Sensor den Abstand zur ihm jeweils zugewandten Hauptfläche der Scheibe an Messpunkten bestimmt wird, die Durchstoßpunkte der Verbindungslinie der Sensoren durch die Hauptfläche sind. Die Messpunkte können über die Hauptflächen verteilt sein oder entlang eines Durchmessers der Scheibe liegen. Sind sie über die Hauptflächen verteilt, resultiert aus der Messung ein flächenbezogener Messwert. Liegen die Messpunkte über einen Durchmesser mit gleichem Abstand zum nächsten Nachbarn verteilt, resultiert aus der Messung ein linienbezogener Messwert.

Ausgleichsebene bezeichnet dabei die Ebene, die durch eine Ausgleichsrechnung nach der Methode der kleinsten Quadrate von flächenbezogenen Messwerten abgeleitet wird. Dementsprechend ist eine Ausgleichsgerade eine Gerade, die durch eine Ausgleichsrechnung nach der Methode der kleinsten Quadrate von linienbezogenen Messwerten abgeleitet wird.

Als flächenbezogenes Dickenprofil der Scheibe wird eine Fläche bezeichnet, auf denen die Messwerte di = D-(FDi + BDi) liegen, wobei di die Dicke der Scheibe an der Messposition i, D der Abstand zwischen den Sensoren, FDi der Abstand des oberen Sensors zum jeweiligen Messpunkt auf der Vorderseite der Scheibe und BDi der Abstand des unteren Sensors zum jeweiligen Messpunkt auf der Rückseite der Scheibe sind.

Als flächenbezogenes Formprofil der Scheibe wird eine Fläche bezeichnet, auf denen die Messwerte si = D-(FDi - BDi) liegen. Eine beliebig geformte Scheibe beliebiger Dicke lässt sich somit stets vollständig beschreiben mittels ihres flächenbezogenen Dickenprofils und ihres flächenbezogenen Formprofils.

Formprofil (shape, S) einer Scheibe bezeichnet nachfolgend das linienbezogene Formprofil, aufgetragen entlang der Schnitttiefe, also in Zustellrichtung. Die Anzahl i der Messpunkte verteilt über die Schnitttiefe sollte vorzugsweise nicht weniger als das Zweifache der Anzahl der oszillierenden Bewegungen der Loslager, also beispielsweise nicht weniger als das Zwiefache der Anzahl der Wechsel bestehend aus Kühlen und Erhitzen der Loslager betragen. Besonders bevorzugt sind nicht weniger als das Achtfache der Wechsel bestehend aus Kühlen und Erhitzen der Loslager. Die Messwerte können mittels Interpolation zu einer durchgezogenen Kurve ergänzt werden.

Warp ist ein Beispiel für eine Kennzahl eines Formfehlers und bezeichnet die Differenz aus maximaler und minimaler Abweichung des Formprofils einer Scheibe von deren Ausgleichsebene. Welligkeit ist ein weiteres Beispiel für eine Kennzahl eines Formfehlers einer Scheibe. Von besonderem Interesse ist die Welligkeit in Abhängigkeit von der Schnitttiefe (linienbezogene, schnitttiefenabhängige Welligkeit). Sie wird bestimmt innerhalb eines Messfensters vorbestimmter Länge, der charakteristischen Wellenlänge der Welligkeit, indem das Maximum des Abstands bestimmt wird, den die Messpunkte des Formprofils zur Ausgleichsgeraden haben.

Der Anfang des Messfensters wird entlang der Schnitttiefe von Messpunkt zu Messpunkt des Formprofils bewegt und die Bestimmung des Maximums des Abstands für jede Position des Messfensters wiederholt. Die Menge der so ermittelten Maxima, aufgetragen gegen die Positionen des jeweils zugehörigen Messfensters, ergibt ein Profil der Welligkeit in Abhängigkeit von der Schnitttiefe. Die charakteristische Wellenlänge beträgt vorzugsweise 2 mm bis 50 mm.

Das Formprofil im Bereich des Einschnitts (cut-in) in das Werkstück und im Bereich des Ausschnitts (cut-out) aus dem Werkstück wird von vergleichsweise starken thermischen und mechanischen Lastwechseln bestimmt.

Schnitttiefe (depth of cut, D.o.C) bezeichnet eine Länge entgegengesetzt zur Zustellrichtung im Bereich vom Einschnitt in das Werkstück bis zum Ausschnitt aus dem Werkstück.

Ein Durchschnittsformprofil ist ein durch Mittelwertbildung der Formprofile mehrerer Scheiben erhaltenes Formprofil.

Formabweichung bezeichnet die Abweichung eines Formprofils oder eines Durchschnittsformprofils von einem Zielformprofil, beispielsweise vom Formprofil einer Referenzscheibe.

Eine Referenzscheibe ist eine Scheibe mit definiertem Dickenprofil und Formprofil. Zweckmäßigerweise hat die Referenzscheibe ein Dickenprofil und ein Formprofil, bei dem die Messwerte di beziehungsweise si auf der entsprechenden Ausgleichsgerade liegen. Als Referenzscheibe kann jedoch auch eine Scheibe mit einem davon abweichenden bestimmten Dickenprofil oder einem bestimmten Formprofil gewählt werden, beispielsweise eine Scheibe mit keilförmigem Dickenprofil oder eine Scheibe mit konstanter Dicke und konvexem oder konkavem Formprofil. Ein solches Formprofil ist gegebenenfalls vorteilhaft, weil es einer Formveränderung entgegenwirken kann, die durch nachfolgendes Aufbringen einer verspannten Schicht wie beispielsweise einer epitaktischen Schicht auf die Vorderseite oder beispielsweise einer Oxidschicht auf die Rückseite einer Scheibe ausgelöst wird.

Korrekturprofil bezeichnet eine Anweisung, mittels eines Stellelements eine Relativbewegung zwischen dem Werkstück und dem Drahtgatter herbeizuführen, indem das Stellelement das Werkstück entlang der Werkstückachse gemäß der Vorgabe des Korrekturprofils verschiebt. Die Anwendung eines Korrekturprofils im Verlauf eines Abtrennvorgangs verfolgt das Ziel, die Formabweichung der im Verlauf des Abtrennvorgangs erhaltenen Scheiben zu minimieren. Die Darstellung eines Korrekturprofils zeigt den Verschiebeweg C des Werkstücks in Abhängigkeit der Schnitttiefe.

Temperaturprofil bezeichnet eine Anweisung, mittels Temperierung der Festlager des Drahtgatters eine Relativbewegung zwischen dem Werkstück und dem Drahtgatter herbeizuführen. Die Darstellung eines Temperaturprofils zeigt die Temperatur T der Kühlflüssigkeit für die Festlager-Temperierung in Abhängigkeit der Schnitttiefe.

Der Erfindung liegen die nachfolgend aufgeführten Beobachtungen zugrunde, die sich auf das Trennläppen eines geraden kreiszylindrischen Stabs aus Silicium in Scheiben mit 300 mm Durchmesser beziehen.

Es wurde beobachtet, dass die gemessenen Formprofile der Scheiben oft Unstetigkeiten im Sinne abrupter Sprünge und Spitzen aufweisen. Das Zustandekommen dieser Sprünge erklären sich die Erfinder so, dass sich im Loslager unter dem mechanischen und thermischen Lastwechsel während des Trennvorgangs axiale Druck- oder Zugspannungen aufbauen, die erst bei Überschreiten der Haftreibung ruckartig durch Gleiten des Loslagers in Achsrichtung abgebaut werden. Dies führt zu Änderungen der Formprofile mit großer Amplitude innerhalb sehr kurzer Schnitttiefen, widerspiegelnd die ruckartige Entspannung der aufgebauten Lagerkräfte innerhalb kurzer Zeitskalen.

Diese Sprünge treten spontan auf und sind zeitlich, also schnitttiefenabhängig nicht vorhersehbar und variieren insbesondere von Trennvorgang zu Trennvorgang. Da sie unvorhersehbar sind, können sie durch ein Korrekturprofil nicht ausgeglichen werden. Diese Formabweichungen schlagen bis auf die vollständig bearbeitete Scheibe durch und machen diese für anspruchsvolle Anwendungen ungeeignet. Belegt wurde diese Erklärung dadurch, dass die Dickenprofile bei den Schnitttiefen, bei der spontane Sprünge der Formprofile beobachtet wurden, dort keine Sprünge aufwiesen. Eine spontane Änderung der Relativposition von Werkstück und Drahtgatter ändert die Dicke der Scheiben bei der jeweiligen Schnitttiefe nicht, sondern betrifft nur die Form der Scheiben.

Es wurde auch beobachtet, dass ein vorsätzliches Erhitzen oder Abkühlen des Festlagers einer Drahtführungsrolle, beispielsweise durch Erhitzen oder Abkühlen der Kühlflüssigkeit des Festlagers, zu einer Ausdehnung beziehungsweise Verkürzung des Festlagers in Achsrichtung führt und so ein Verschieben des Loslagers in Achsrichtung vom Festlager weg beziehungsweise auf das Festlager zu bewirkt.

Des Weiteren wurde beobachtet, dass durch fortgesetztes In-Bewegung-Halten der Axialposition des Loslagers spontane Sprünge in den Formprofilen von Scheiben eliminiert werden können. Dies erklären sich die Erfinder damit, dass sich bei ständiger Lagerbewegung keine Haftreibung aufbauen kann und somit die Axialposition des Loslagers den auf das Lager wirkenden Kräften unmittelbar folgt.

Es ist daher angezeigt einen fortgesetzten schnellen Wechsel der Temperierung des Festlagers um eine mittlere Temperatur der Kühlflüssigkeit herum herbeizuführen, beispielsweise mittels einer sinusförmigen Oszillation des Temperatur-Sollwerts. Dadurch wird das Loslager in ständiger Bewegung gehalten und unvorhersehbare ruckartige Lageänderungen des Loslagers in Folge abrupter Wechsel von Haftreibung zu Gleitreibung (stick and slip) werden unterdrückt.

Es wurde darüber hinaus beobachtet, dass die relative Anordnung von Werkstück und Drahtgatter insbesondere im Moment des Einschnitts, also im Moment des ersten Kontakts des Werkstücks mit dem Drahtgatter, aber auch über den gesamten Trennvorgang hinweg, einem starken thermischen und mechanischen Lastwechsel unterliegt. So wird beim Einschnitt des Sägedrahts in das Werkstück in Folge der dabei am Werkstück verrichteten Spanarbeit eine Wärmeleistung von einigen Kilowatt auf das Werkstück, die Drahtführungsrollen und deren Lager übertragen, und während eines Abtrennvorgangs werden die Drahtführungsrollen einem mechanischen Lastwechsel mit einer Kraft im Bereich von 10 kN (Kilonewton) in Achsquerrichtung ausgesetzt.

Der mechanische Lastwechsel führt zu einer Erhöhung der Reibung in den Lagern, über die die Drahtführungsrollen mit dem Maschinenrahmen verbunden sind. Zum einen erhöht sich die Rollreibung der Wälzkörper infolge der erhöhten axialen Auflast, zum anderen erhöht sich die Reibung infolge einer Verkippung der Achse der Lagerbuchsen gegenüber der Achse, den die Drahtführungsrolle in unbelastetem Zustand hat. Diese Verkippung führt zu einem Walken (flexing) der Lagerbuchse in der mit dem Maschinenrahmen verbundenen Hülse, in die die Lagerbuchse eingepasst ist. Die Walkarbeit (flexing work) führt am Übergang von Lagerbuchse und Hülse zu einer Erwärmung.

Insbesondere die Lastwechsel im Moment des Ein- oder Ausschnitts können ein Verkippen, Verkanten oder Verklemmen des Loslagers bewirken, die mit einem Übergang von Haftreibung zu Gleitreibung abrupte Sprünge der Axialposition des Loslagers auslösen, die eine vergleichsweise große Amplitude haben.

Aufgrund der Beobachtungen ist es auch angezeigt, dass die Geschwindigkeit der Wechsel der Temperierung des Festlagers möglichst hoch sein sollte, um ein fortgesetztes In-Bewegung-Halten der axialen Loslagerposition auch in Momenten schneller, durch den Trennvorgang selbst hervorgerufener Lastwechsel, insbesondere den besonders hohen Lastwechseln in den Momenten des Einsägens (cut-in) und Aussägens (cut-out), sicher zu gewährleisten. Allerdings sind der Geschwindigkeit, mit der sich das Festlager umtemperieren lässt, Grenzen gesetzt, insbesondere durch die involvierten thermischen Massen, den Wärmewiderstand beim Übergang der Kühlflüssigkeit auf die Elemente der Baugruppe des Festlagers und durch die Geschwindigkeit, mit der sich die Kühlflüssigkeit selbst primärseitig erhitzen oder abkühlen lässt.

Das fortgesetzte In-Bewegung-Halten des Loslagers kann auch durch andere Maßnahmen als durch Temperieren der Festlager mit periodischen Wechseln aus Kühlen und Erhitzen erzielt werden, beispielsweise mittels Stellelementen, die an den Festlagern eingreifen und piezoelektrisch, hydraulisch, pneumatisch, oder elektromechanisch arbeiten, insbesondere mittels Tauchspulen-Aktuatoren (voice coil actuator). In diesem Fall ist es zweckmäßig, die Festlager so zu temperieren, dass möglichst nur die durch Lastwechsel induzierte Erwärmung des Festlagers ausgeglichen wird.

Das oszillierende axiale Bewegen der Loslager prägt dem Formprofil der erhaltenen Scheiben eine der Lagerbewegung proportionale Formkomponente auf. Infolgedessen zeigen die Formprofile bei Schnitttiefen, bei denen das oszillierende axiale Bewegen der Loslager ausgelöst wurde, entsprechende Aus- und Einbuchtungen.

Um diese Wirkung aufzuheben, wird vorgeschlagen, ein axiales Verschieben des Werkstücks gemäß der Vorgabe eines Korrekturprofils herbeizuführen, welches das oszillierende Bewegen der Loslager möglichst genau ausgleicht. Die relative Position von Drahtgatter und Werkstück zueinander bleiben so unverändert erhalten. Da Längenänderungen durch Temperaturänderungen aufgrund der thermischen Trägheit der involvierten Massen zeitlich verzögert eintreten, Verschiebungen durch Stellelemente wie beispielsweise Piezo-Aktuatoren demgegenüber unmittelbar erfolgen, ist zum Erzielen dieses Ausgleichs vorzugsweise vorgesehen, das axiale Verschieben des Werkstücks mit einer entsprechenden Verzögerung auszulösen.

Dickenprofile und Formprofile von Scheiben mit Positionen auf der Werkstückachse, die nahe beieinanderliegen, unterscheiden sich nur geringfügig voneinander. Dickenprofile von Scheiben mit Positionen auf der Werkstückachse, die weiter voneinander entfernt sind, sind zwar ähnlich, aber Formprofile solcher Scheiben unterscheiden sich beträchtlich. Folglich existiert kein Korrekturprofil, durch dessen Anwendung das Formprofil einer jeden Scheibe eines Werkstücks mit demselben Erfolg dem Zielformprofil angenähert werden kann.

Formprofile von Scheiben mit gleichen Positionen auf der Werkstückachse unterscheiden sich in der Regel nur geringfügig voneinander, wenn sie im Zuge unmittelbar aufeinander folgender Abtrennvorgänge entstehen. Sie unterscheiden sich aber in der Regel erheblich, wenn sie aus Abtrennvorgängen hervorgegangen sind, zwischen denen mehrere dazwischenliegende Abtrennvorgänge durchgeführt wurden. Folglich existiert auch kein Korrekturprofil, durch dessen Anwendung und Beibehaltung das Formprofil von Scheiben mit derselben Position auf der Werkstückachse über viele aufeinander folgende Trennvorgänge hinweg unverändert bleibt. Stattdessen muss das Korrekturprofil gegebenenfalls von Abtrennvorgang zu Abtrennvorgang zumindest geringfügig geändert werden, um Scheiben über eine Vielzahl von Abtrennvorgängen hinweg erhalten zu können, deren Formprofil näherungsweise dem Zielformprofil entspricht. Es ist also mit langsamen Formänderungen von Scheiben über mehrere Abtrennvorgänge gemäß einer Drift zu rechnen, ebenso wie mit spontan auftretenden Unstetigkeiten im Formprofil von Scheiben aus unmittelbar aufeinander folgenden Abtrennvorgängen.

Es wird daher vorgeschlagen,
(a) die Temperatur des Festlagers einer jeden der Drahtführungsrollen des Drahtgatters einem vorgegebenen Temperaturprofil folgend im ständigen Wechsel um einen vorgegebenen Mittelwert herum zu variieren, um Sprünge im Formprofil der Scheiben zu vermeiden. Alternativ kann das damit bewirkte oszillierende axiale Bewegen der Loslager durch Stellelemente bewirkt werden, die an den Festlagern eingreifen. In diesem Fall wird die Temperierung der Festlager vorzugsweise nur dazu verwendet, um die durch die Lastwechsel des Abtrennvorgangs erzeugte Wärme abzuführen; und
(b) das Werkstück entlang der Werkstückachse mittels der Stellvorrichtung gemäß der Vorgabe eines Korrekturprofils zu verschieben, dem eine oszillierende Komponente aufgeprägt ist, die dem Positionswechsel der Loslager nach Größe und Frequenz genau entgegengesetzt ist.

Darüber hinaus ist die Abfolge von Abtrennvorgängen in Initialschnitte und erste und zweite Folgeschnitte untergliedert. Diese unterscheiden sich vorzugsweise bezüglich der Konfiguration des Korrekturprofils, welches das Verschieben des Werkstücks entlang der Werkstückachse während des Durchtritts des Werkstücks durch das Drahtgatter vorgibt. Das Korrekturprofil für die ersten und zweiten Folgeschnitte und gegebenenfalls auch für die Initialschnitte umfasst neben der oszillierenden Komponente zusätzlich eine formprofilbezogene Komponente, die sich von Abtrennvorgang zu Abtrennvorgang ändern kann.

Die Abfolge von Abtrennvorgängen beginnt zweckmäßigerweise nach einer Änderung des Sägesystems, also nach Änderung von mindestens einem Merkmal der Drahtsäge, des Sägedrahts oder des Kühlschmiermittels. Eine Änderung des Sägesystems liegt beispielsweise vor, wenn ein Wechsel von Drahtführungsrollen erfolgte oder mechanische Justierungen an der Drahtsäge vorgenommen wurden. Die ersten Abtrennvorgänge der Abfolge sind Initialschnitte, vorzugsweise eine Anzahl von 1 bis 5 davon. Die Initialschnitte werden beispielsweise unter Anwenden eines Korrekturprofils durchgeführt, das nur die oszillierende Komponente umfasst.

Alternativ dazu kann für den Initialschnitt ein Korrekturprofil vorgegeben werden, das die oszillierende Komponente umfasst und zusätzlich eine formprofilbezogene Komponente hat, die auf Formabweichungen reagiert, die nach einer gleichartigen Änderung des Sägesystems aufgetreten sind. Diese erste formprofilbezogene Komponente ist proportional zur Differenz eines ersten Durchschnittsformprofils und des Formprofils einer Referenzscheibe, wobei das erste Durchschnittsformprofil von Scheiben bestimmt wird, die im Verlauf eines oder mehrerer Initialschnitte einer vorausgegangenen Abfolge von Abtrennvorgängen abgetrennt wurden.

Das Korrekturprofil eines jeden der ersten Folgeschnitte umfasst die oszillierende Komponente und vorzugsweise eine zweite formprofilbezogene Komponente, die proportional zur Differenz eines zweiten Durchschnittsformprofils und des Formprofils der Referenzscheibe ist, wobei das zweite Durchschnittsformprofil von Scheiben bestimmt wird, die im Verlauf eines oder mehrerer der Initialschnitte der Abfolge abgetrennt wurden.

Das Korrekturprofil eines jeden der zweiten Folgeschnitte umfasst die oszillierende Komponente und vorzugsweise eine dritte formprofilbezogene Komponente, die proportional zur Differenz eines dritten Durchschnittsformprofils und des Formprofils der Referenzscheibe ist, wobei das dritte Durchschnittsformprofil von Scheiben bestimmt wird, die von mindestens 1 bis 5 Abtrennvorgängen der Abfolge stammen, die dem jeweiligen zweiten Folgeschnitt vorausgegangen sind.

Aufgrund der fortwährenden Anpassung der Korrekturprofile von Abtrennvorgang zu Abtrennvorgang werden die Formprofile der erhaltenen Scheiben innerhalb weniger Abtrennvorgänge auf die Form der Referenzscheibe hin konvergieren, und die Formabweichungen minimal werden.

### Kurzbeschreibung der Figuren

**Fig. 1** zeigt in perspektivischer Darstellung Merkmale einer Drahtsäge, mittels derer das erfindungsgemäße Verfahren durchgeführt werden kann.
**Fig. 2** zeigt den Querschnitt durch eine Drahtführungsrolle der Drahtsäge gemäß Fig.1 .
**Fig. 3** zeigt ein Temperaturprofil (oben) und ein resultierendes Formprofil (unten).
**Fig. 4** zeigt ein Temperaturprofil mit oszillierender Komponente (oben) und ein resultierendes Formprofil (unten).
**Fig. 5** zeigt ein Korrekturprofil mit formprofilbezogener Komponente (oben), ein konstantes Temperaturprofil (Mitte) und ein resultierendes Formprofil (unten).
**Fig. 6** zeigt ein Korrekturprofil mit formprofilbezogener Komponente (oben), ein Temperaturprofil mit oszillierender Komponente (Mitte) und ein resultierendes Formprofil (unten).
**Fig.7** zeigt repräsentativ für die Erfindung ein Korrekturprofil (oben) mit formprofilbezogener Komponente und mit oszillierender Komponente, ein Temperaturprofil (Mitte) mit oszillierender Komponente und ein resultierendes Formprofil (unten).
**Fig.8** zeigt schematisch eine Anordnung zur Bestimmung des Formprofils einer Scheibe.
**Fig.9** zeigt eine entsprechende Anordnung mit einer Scheibe mit konkaver Form.
**Fig.10** zeigt das Formprofil der Scheibe mit konkaver Form und das Formprofil einer Referenzscheibe.
**Fig.11** zeigt ein Korrekturprofil bestehend aus einer formprofilbezogenen Komponente, die vom Formprofil von Fig. 10 abgeleitet ist. Sie ist proportional zur Differenz der Formprofile der Scheibe mit konkaver Form und der Referenzscheibe.

### Liste der verwendeten Bezugszeichen und Abkürzungen

- **1**: Sägedraht
- **2**: Drahtabschnitt
- **3**: linke Drahtführungsrolle
- **4**: rechte Drahtführungsrolle
- **5**: Achse der linken Drahtführungsrolle
- **6**: Achse der rechten Drahtführungsrolle
- **7**: Drehung der linken Drahtführungsrolle
- **8**: Drehung der rechten Drahtführungsrolle
- **9**: Drahtzufuhr
- **10**: Drahtabfuhr
- **11**: Drahtgatter
- **12**: Werkstück (Halbleiterstab)
- **13**: Bewegung der Drahtabschnitte
- **14**: Werkstückachse
- **15**: Halteleiste
- **16**: Klebefuge
- **17**: Zustellrichtung
- **18**: Rillen
- **19**: linke Düse
- **20**: rechte Düse
- **21**: Austrittsöffnungen
- **22**: linker Strahl
- **23**: rechter Strahl
- **24**: Schnitttiefe
- **25**: Trennspalt
- **26**: Kennkerbe
- **27**: Formprofil
- **28**: Temperaturprofil
- **29**: Formprofil
- **30**: Formprofil
- **31**: Temperaturprofil
- **32**: Korrekturprofil
- **33**: Formprofil
- **34**: abrupter Sprung
- **35**: abrupter Sprung
- **36**: Belag
- **37**: Maschinenrahmen
- **38**: Festlager
- **39**: Loslager
- **40**: Temperiervorrichtung
- **41**: Korrekturprofil
- **42**: regelmäßige kurzwellige Modulation
- **43**: oszillierende Komponente
- **44**: Kühlflüssigkeits-Kreislauf
- **45**: Bewegungsrichtung des Loslagers
- **46**: Formprofil
- **47**: Scheibe
- **48**: oberer Sensor
- **49**: unterer Sensor
- **T**: Temperatur der Kühlflüssigkeit
- **T+**: Amplitude
- **T-**: Amplitude
- **T0**: mittlere Temperatur der Kühlflüssigkeit
- **S**: Form
- **C**: Verschiebeweg des Werkstücks
- **D**: Abstand zwischen den Sensoren
- **ΔS**: Formabweichung
- **ΔT**: Temperaturänderung
- **FDi**: Abstand des oberen Sensors zur Vorderseite der Scheibe am Messpunkt i
- **BDi**: Abstand des unteren Sensors zur Rückseite der Scheibe am Messpunkt i
- i: Messpunkt
- **di**: Dicke der Scheibe am Messpunkt i
- **si**: Form der Scheibe am Messpunkt i
- **D.o.C.**: Schnitttiefe
- **WGTO**: Wire-Guide Temperature Oscillation
- **IPPC**: Ingot Position Piezo Control

Die Erfindung wird im Folgenden anhand von Abbildungen eingehender erläutert:

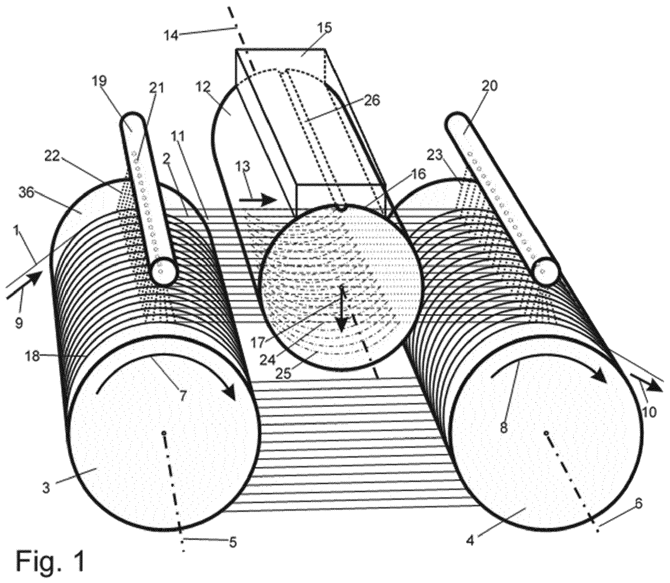

Fig. 1 zeigt die im Hinblick auf die vorliegende Erfindung wesentlichen Elemente einer Drahtsäge. Sägedraht 1 aus einem Vorrat (Frischdraht-Spule) wird mittels Rillen 18 im verschleißresistenten Belag 36 spiralförmig so einer linken 3 Drahtführungsrolle und einer rechten Drahtführungsrolle 4 zugeführt, dass auf der dem Werkstück 12 zugewandten Seite der Drahtführungsrollen 3 und 4 ein Drahtgatter 11 aus parallel zueinander verlaufenden Drahtabschnitten 2 des Sägedrahts 1 aufgespannt wird. Durch gleichsinniges Drehen 7 und 8 der Drahtführungsrollen 3 und 4 um ihre Achsen 5 und 6 bewegt sich das Drahtgatter relativ zum Stab 1. Die Drahtführungsrollen besitzen gerade kreiszylindrische Form und ihre Achsen 5 und 6 sind parallel zueinander ausgerichtet, so dass die Drahtabschnitte 2 des Drahtgatters 11 senkrecht zu den Achsen der Drahtführungsrollen verlaufen. Die Pfeile mit den Bezugszahlen 9 und 10 bezeichnen die Drahtzufuhr und Drahtabfuhr, der Pfeil mit der Bezugszahl 13 die Bewegung der Drahtabschnitte 2 des Drahtgatters 11.

Das Werkstück 12 besitzt eine Werkstückachse 14, die in der Regel parallel zu den Achsen 5 und 6 der Drahtführungsrollen ausgerichtet ist, und im Fall eines Werkstücks aus Halbleitermaterial meist noch eine Kennkerbe (Notch) 26 aufweist. Abweichend davon lässt sich durch gezieltes Verdrehen der Werkstückachse in einer Ebene parallel zur Ebene durch das Drahtgatter 11 eine sogenannte "Fehlorientierung" der durch den Trennvorgang erhaltenen Scheiben erreichen. Das Werkstück 12 ist über eine Klebefuge 16 mit einer Halteleiste 15 und letztere mit einer Zustellvorrichtung (nicht gezeigt) verbunden. Über einen linken Strahl 22 und einen rechten Stahl 23 an Arbeitsflüssigkeit aus einer linken Düse 19 und einer rechten Düse 20 mit Austrittsöffnungen 21 wird das Drahtgatter 11 mit Arbeitsflüssigkeit beaufschlagt.

Durch Drehen der Drahtführungsrollen und somit Bewegen der Drahtabschnitte des Drahtgatters relativ zum Werkstück und Zustellen des Werkstücks mittels der Zustellvorrichtung in eine Zustellrichtung 17 senkrecht zur Ebene des Drahtgatters wird das Werkstück in Kontakt mit dem Drahtgatter gebracht und bei weiterer Zustellung bewirken die bewegten Drahtabschnitte bei Anwesenheit der Arbeitsflüssigkeit einen Materialabtrag und bilden so parallele Trennspalte 25 im Stab aus. Der Vorgang wird solange fortgeführt, bis sich die Drahtabschnitte Material abtragend vollständig durch das Werkstück hindurchgearbeitet haben und in der Halteleiste 15 zu liegen gekommen sind.

Die Trennspalte begrenzen dann Vorder- und Rückseiten einer Vielzahl so erhaltener Scheiben, die wie Zinken eines Kamms nur noch mittels der Klebefuge 16 mit der Halteleiste 15 verbunden sind. Der Sägedraht 1 unterliegt ebenso einem Materialabtrag (Verschleiß) und wird nach Durchlaufen des Drahtgatters einem Vorrat an verbrauchtem Sägedraht zugeführt. Der Pfeil 10 bezeichnet die Richtung der Drahtabfuhr. Die Ausdehnung der Trennspalte 25 entgegengesetzt zur Zustellrichtung 17 der Stabzustellung während des Trennvorgangs wird als Schnitttiefe 24 bezeichnet.

In einer zur Durchführung des erfindungsgemäßen Verfahrens geeigneten Drahttrennläppvorrichtung ist der Sägedraht beispielsweise ein Pianodraht aus hypereutektischem perlitischem Stahl mit einem Durchmesser von anfänglich 175 µm, die Arbeitsflüssigkeit ist eine Aufschlämmung (slurry) von Siliciumcarbid (SiC) mit einer mittleren Korngröße von circa 13 µm (FEPA F500) in einer Trägerflüssigkeit aus Dipropylenglycol (DPG). Die Drahtsäge umfasst beispielsweise vier Drahtführungsrollen - zwei obere, die das Drahtgatter aufspannen und zwei untere, die den Sägedraht so umlenken, dass zwischen den Drahtführungsrollen Raum zur Aufnahme der abgetrennten Scheiben geschaffen wird - mit einem Durchmesser von ca. 180 mm und Abständen der Achsen der oberen Drahtführungsrollen von 520 mm (Länge der Drahtabschnitte des Drahtgatters).

Der Sägedraht wird beispielsweise mittels einer Vielzahl von Richtungsumkehrungen jeweils um etwa 320 m vorwärts (Bewegungsrichtung 13) und 240 m rückwärts (entgegengesetzt zu Bewegungsrichtung 13) bewegt, so dass während eines Paares an Drahtbewegungen 320 m + 240 m = 560 m Sägedraht die Trennspalte durchlaufen und der Vorrat an Sägedraht insgesamt um 320 m - 240 m = 80 m weiterbewegt wird, der Sägedraht also 560/80 = 7× genutzt wird (Pilgerschrittverfahren). Der Sägedraht bewegt sich in Drahtlängsrichtung mit 10 m/s.

Das Werkstück ist beispielsweise ein geradzylindrischer Stab aus einkristallinem Silicium mit einem Durchmesser von 301 mm und wird während des Trennvorgangs mit durchschnittlich etwa 0,4 mm/s zugestellt, so dass der gesamte Trennvorgang etwa 13 Stunden dauert. Aufgrund der Spanarbeit, die Sägedraht und Arbeitsflüssigkeit am Werkstück verrichten, der Zustellgeschwindigkeit des Siliciumstabs auf das Drahtgatter zu und der gewählten Drahtlaufgeschwindigkeit von 10 m/s erfährt der Sägedraht in der Mitte seiner freien Länge zwischen den Drahtführungsrollenachsen, also in der Mitte des Siliciumstabs, eine Durchbiegung in Zustellrichtung von etwa 6 mm. Unter diesen Bedingungen erfährt der Sägedraht eine Abnutzung entsprechend einer Abnahme seines Durchmessers von 12 µm. Der Abstand benachbarter Rillen in der Drahtführungsrolle wurde daher mit von der Frischdraht-Eintrittsseite zur Altdraht-Austrittsseite kontinuierlich um insgesamt 12 µm abnehmend gewählt, um den Drahtverschleiß auszugleichen, so dass von Stabanfang bis -ende Scheiben gleicher mittlerer Dicke erhalten werden.

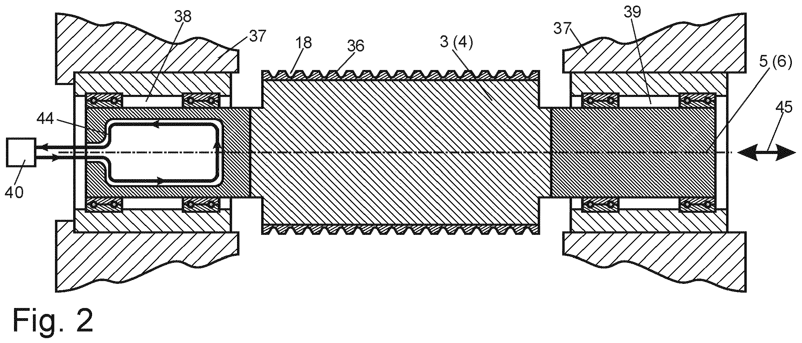

Fig. 2 zeigt eine Drahtführungsrolle (linke 3 oder rechte Drahtführungsrolle 4) in einer Schnittebene durch die Drahtführungsrollenachse (5 linke bzw. 6 rechte Drahtführungsrollenachse) mit dem fest mit dem Maschinenrahmen 37 verbundenen Festlager 38 und dem gegenüber dem Maschinenrahmen in Achsrichtung der Drahtführungsrolle beweglichen Loslager 39, verschleißresistentem Belag 36 und Rillen 18 zur Führung des Sägedrahts. Mittels einer Temperiervorrichtung 40 und eines Kühlflüssigkeits-Kreislaufs 44 wird das Festlager 38 gekühlt oder erhitzt, so dass es sich in Achsrichtung verkürzt oder ausdehnt, wodurch das Loslager 39 und somit die gesamte Drahtführungsrolle in eine der Achsrichtung entsprechenden Bewegungsrichtung 45 nach links oder rechts bewegt werden.

Im Mittel wird das Loslager auf einer Temperatur bevorzugt etwas oberhalb der Temperatur des Maschinenrahmens gehalten bei 25 - 35 °C, besonders bevorzugt bei 30 °C (Raumtemperatur etwa 21 °C). Eine leicht gegenüber der Raumtemperatur erhöhte Temperatur hat den Vorteil gleichmäßigen Wärmeflusses stets von der Drahtführungsrolle in den Maschinenrahmen (keine thermischen Vorzeichenwechsel und somit höhere Stabilität und günstigere Regeleigenschaften); außerdem ist eine Erwärmung energetisch sparsamer und mit höherer Leistung, also schneller, als eine Kühlung umzusetzen.

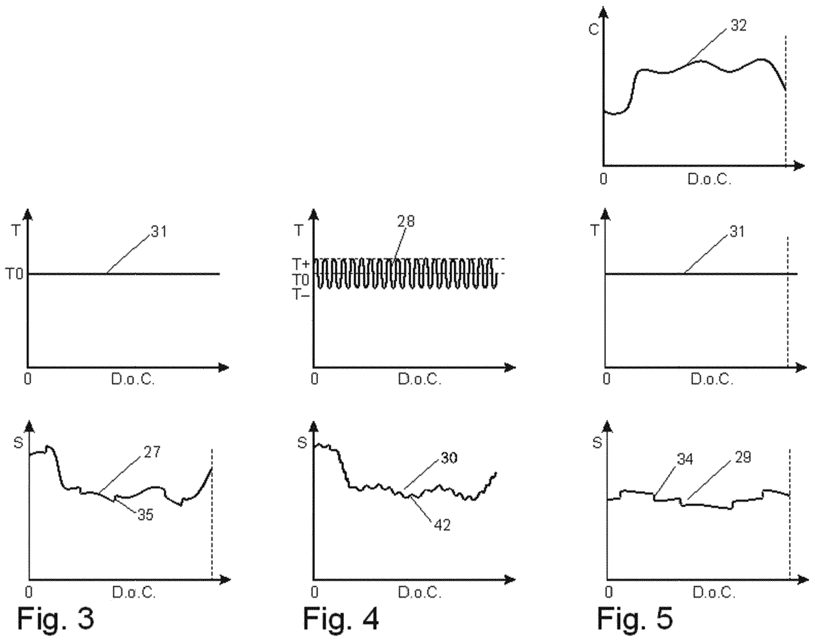

Fig. 3 zeigt ein konstantes Temperaturprofil 31 (T = Temperatur in °C, D.o.C. = Schnitttiefe (depth of cut) in mm) zur Regulierung der Temperatur der Festlager und das Formprofil 27 (S = shape in µm) einer Halbleiterscheibe, die unter Anwendung dieses Temperaturprofils von einem Werkstück abgetrennt wurde. Dargestellt sind das Temperaturprofil 31 und das Formprofil 27 über eine Schnitttiefe von 0 mm (Einschnitt, cut-in) bis zu einer Schnitttiefe entsprechend dem Durchmesser des Werkstücks von 301 mm (gestrichelte vertikale Linie). Die tatsächliche maximale Schnitttiefe betrug 308 mm, um die Durchbiegung der Drahtabschnitte von ca. 6 mm zu berücksichtigen und um sicherzustellen, dass am Ende der Zustellung des Werkstücks alle Drahtabschnitte des Drahtgatters vollständig in der Halteleiste zu liegen gekommen sind. Das Formprofil 27 ist sehr wellig und weist abrupte Sprünge 35 auf, die durch unvorhersehbare ruckartige Bewegungen der Loslager erklärbar sind. Eine derart unebene Halbleiterscheibe ist für anspruchsvolle Anwendungen ungeeignet.

Die Sprünge 35 sind Ausdruck von Anteilen großer Amplituden bei hohen Raumfrequenzen in der Fourierzerlegung des Formprofils 27. Alle dem Drahtsägen folgenden Bearbeitungen der Halbleiterscheibe (Läppen, Schleifen, Ätzen, Polieren) wirken aufgrund der Steifigkeit der Halbleiterscheibe im Bereich hoher Raumfrequenzen als Tiefpass. Das bedeutet, diese Bearbeitungen sind in der Lage, die abrupten Sprünge 35 bis zu einem gewissen Grad durch Glätten zu mildern. Trotzdem verbleibt selbst nach dem abschließenden Polieren der Halbleiterscheibe noch eine lokale Unebenheit (lokale Welligkeit), deren räumlich hochfrequente Anteile im Wellenlängenbereich der Nanotopologie liegen. Für die Nanotopologie (lokale Unebenheit der vollständig bearbeiteten Scheibe) bestehen besonders hohe Anforderungen, da sie den Bereich der lateralen Ausdehnung kritischer Strukturgrößen von Halbleiterbauelementen beschreibt und bei unzureichend guter Nanotopologie insbesondere mehrlagige Bauelemente zu strukturell-mechanischen oder elektrischen Durchbrüchen der Verdrahtungsebenen führen können, was einen Komplettausfall des Bauteils bewirkt.

Fig. 4 zeigt ein Temperaturprofil 28 mit einer oszillierenden Komponente zur Regulierung der Temperatur der Festlager und das Formprofil 30 einer Halbleiterscheibe, die unter Anwendung dieses Temperaturprofils von einem Werkstück ohne Verschieben des Werkstücks während des Durchtritts durch das Drahtgatter abgetrennt wurde. Das Temperaturprofil 28 sieht einen fortgesetzten Temperaturwechsel mit einer mittleren Temperatur T0 und mit Amplituden T+ und T-vor.

Das Formprofil 30 weist wie das Formprofil 27 auf eine Halbleiterscheibe hin, die vergleichsweise uneben ist. Allerdings sind die Sprünge 35 wegen der vom Temperaturprofil 28 vorgegebenen Temperaturwechsel und der damit bewirkten haftreibungsfreien kontinuierlichen Loslagerbewegung nicht vorhanden, und dementsprechend ist die Nanotopologie der Halbleiterscheibe nach folgenden Bearbeitungen einschließlich dem Polieren verbessert. Dennoch verbleibt eine langwellige Unebenheit, welche die abgetrennte Halbleiterscheibe für anspruchsvolle Anwendungen weniger geeignet macht. Wegen des oszillierenden Wechsels der Temperatur der Festlager wird die relative Lage von Werkstück und Drahtgatter zueinander während des Durchtritts des Werkstücks durch das Drahtgatter fortgesetzt verändert. Dies prägt dem Formprofil 30 zusätzlich eine regelmäßige kurzwellige Modulation 42 auf. Allerdings verursacht der Temperaturwechsel keine abrupten Sprünge im Formprofil, und eine folgende Bearbeitung der Halbleiterscheibe durch Läppen, Schleifen, Ätzen und Polieren hinterlässt keine lokale Welligkeit im kritischen Wellenlängenbereich der Nanotopologie mehr.

Fig. 5 zeigt ein Korrekturprofil 32 (C = correction profile), ein konstantes Temperaturprofil 31 zur Regulierung der Temperatur der Festlager und das Formprofil 29 einer Halbleiterscheibe, die unter Anwendung des Temperaturprofils 31 und des Korrekturprofils 32 von einem Werkstück abgetrennt wurde. Entsprechend der Vorgabe des Korrekturprofils wird das Werkstück mittels eines Stellelements entlang der Werkstückachse relativ zum Maschinenrahmen und relativ zum Drahtgatter schnitttiefenabhängig so verschoben, dass ein nahezu ebenes Formprofil der Halbleiterscheibe resultiert. Wegen des konstanten Temperaturprofils 31 weist das Formprofil 29 der erhaltenen Halbleiterscheibe abrupte Sprünge 34 auf.

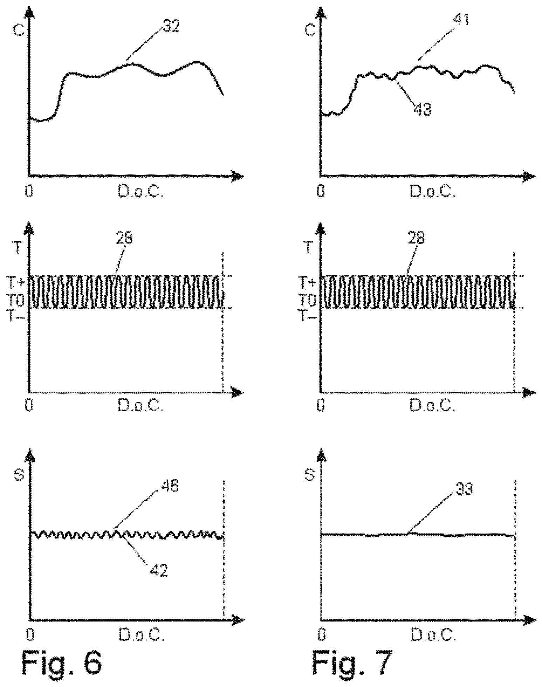

Fig. 6 zeigt ein Korrekturprofil 32 mit formprofilbezogener Komponente, das Temperaturprofil 28 mit oszillierender Komponente und das Formprofil 46 einer Halbleiterscheibe, die während eines Folgeschnitts erfindungsgemäß unter Anwendung des Temperaturprofils 28 und des Korrekturprofils 32 von einem Werkstück abgetrennt wurde. Das Korrekturprofil 32 ist derart konfiguriert, dass es eine formprofilbezogene Komponente umfasst, die proportional zur Differenz eines Durchschnittsformprofils und des Formprofils einer Referenzscheibe ist, wobei eine drahtsägespezifische Proportionalitätskonstante berücksichtigt ist. Das Durchschnittformprofil basiert auf den Formprofilen einer Auswahl von Halbleiterscheiben resultierend aus einer Auswahl vorangegangener Abtrennvorgänge.

Die drahtsägespezifische Proportionalitätskonstante (in µm/°C) gibt an, welche Formabweichung ΔS (in µm) eine Änderung der Temperatur ΔT der Festlager-Temperierung um 1 °C zur Folge hat. Sie ist von Drahtsäge zu Drahtsäge etwas unterschiedlich, da der Wärmeübergang von der Kühlflüssigkeit auf die Festlager aufgrund konstruktiver Unterschiede, unterschiedlicher Durchfluss-Mengen und Durchfluss-Geschwindigkeiten der Kühlflüssigkeit und aufgrund unterschiedlicher Leistung der verwendeten Wärmetauscher für jede Drahtsäge spezifisch ist.

Die drahtsägespezifische Proportionalitätskonstante wird zweckmäßigerweise einmalig für eine Drahtsäge experimentell bestimmt, indem während eines Testschnitts ein Temperaturprofil angewendet wird, das mehrere Temperatur-Sprünge um eine bestimmte Temperatur bei verschiedenen Schnitttiefen vorsieht und dessen Wirkung als Formabweichung (in µm) im Formprofil der erhaltenen Halbleiterscheiben gemessen wird. Eine genaue Bestimmung der drahtsägespezifischen Proportionalitätskonstante ist nicht erforderlich, da aufgrund des erwähnten konvergierenden Mechanismus ein Fehler in der Bestimmung nur eine langsamere Geschwindigkeit der Konvergenz des Durchschnittsformprofils zum angestrebten Formprofil der Referenzscheibe zur Folge hat.

Die mittlere Temperatur T0 im Temperaturprofil 28 von Fig.6 betrug 30 °C, und es wurden über die gesamte Dauer des Abtrennvorgangs von 13 h (= 780 min) 20 Paare von Temperatur-Erhöhungen und Temperatur-Reduktionen mit Amplituden T+ und T-von ±3 °C vorgenommen. Das Formprofil 46 der erhaltenen Halbleiterscheibe ist aufgrund der Anwendung des Korrekturprofils 32 vergleichsweise eben und weist insbesondere keine abrupten Sprünge 35 in Folge von unvorhersehbaren ruckartigen Bewegungen der Loslager der Drahtführungsrollen des Drahtgatters auf. Dem Formprofil 46 ist erwartungsgemäß eine regelmäßige kurzwellige Modulation 42 aufgrund der Temperaturwechsel überlagert, die das Temperaturprofil 28 vorgibt. Die der Modulation entsprechende Welligkeit ist vergleichsweise langwellig und hat eine vergleichsweise geringe Amplitude, und verschwindet durch die Nachfolgebearbeitung (Läppen, Schleifen, Ätzen, Polieren) nach dem Polieren fast vollständig, weshalb Halbleiterscheiben mit vergleichsweise sehr guter lokaler Ebenheit (Nanotopologie) zugänglich sind.

Fig. 7 schließlich zeigt ein Korrekturprofil 41 mit formprofilbezogener Komponente und mit oszillierender Komponente, das Temperaturprofil 28 mit oszillierender Komponente und das Formprofil 33 einer Halbleiterscheibe, die während eines Folgeschnitts erfindungsgemäß unter Anwendung des Temperaturprofils 28 und des Korrekturprofils 41 von einem Werkstück abgetrennt wurde. Das Korrekturprofil 41 ist derart konfiguriert, dass es eine formprofilbezogene Komponente umfasst, die proportional zur Differenz eines Durchschnittsformprofils und einer Referenzscheibe ist, wobei eine drahtsägespezifische Proportionalitätskonstante berücksichtigt ist. Das Durchschnittsformprofil basiert auf den Formprofilen einer Auswahl von Halbleiterscheiben resultierend aus einer Auswahl vorangegangener Abtrennvorgänge. Das Korrekturprofil 41 ist im Vergleich mit dem Korrekturprofil 32 um eine oszillierende Komponente 43 erweitert, die gegen die vom Temperaturprofil 28 aufgeprägte regelmäßige kurzwelligen Modulation 42 gerichtet ist. Im Ergebnis wird die Modulation genau ausgeglichen und eine Halbleiterscheibe mit dem Formprofil 33 erhalten, das sich durch ein vergleichsweise sehr hohes Maß an Ebenheit auszeichnet. Es ist insbesondere frei von langwelligen Unebenheiten aufgrund einer Drift der Relativposition von Werkstück und Drahtgatter zueinander, frei von abrupten Sprüngen aufgrund von unvorhersehbaren ruckartigen Bewegungen der Loslager und frei von regelmäßigen kurzwelligen Modulationen ausgelöst durch die oszillierende Komponente im Temperaturprofil 28.

Die Spanarbeit, die die Drahtabschnitte in Anwesenheit von Hartstoffen während des Abtrennvorgangs verrichten, bewirkt eine Durchbiegung der Drahtabschnitte in Richtung der Zustellung des Werkstücks auf das Drahtgatter. Diese Durchbiegung führt zu einem verzögerten Erreichen der Schnitttiefe, die gemäß einer aktuellen Position der Zustellung des Werkstücks zu erwarten wäre. Die zu einem bestimmten Zeitpunkt tatsächlich erreichte Schnitttiefe ist wegen der Durchbiegung der Drahtabschnitte geringer. Es ist zweckmäßig, das zu berücksichtigen, indem die Geschwindigkeit der Zustellung des Werkstücks auf das Drahtgatter so eingestellt wird, dass das Zeitspanvolumen über die gesamte Schnittdauer im Wesentlichen konstant bleibt. Beim Abtrennvorgang, der die Halbleiterscheibe mit dem in Fig.7 gezeigten Formprofil 33 lieferte, wurde so verfahren und die Durchbiegung blieb während des gesamten Abtrennvorgangs konstant bei etwa 6 mm, mit Ausnahme während der Phase des Einschnitts über eine Länge von 6 mm. In dieser Phase baute sich die Durchbiegung der Drahtabschnitte auf. Die Durchbiegung wurde direkt an der Krümmung der Sägerillen, die insbesondere beim Drahtsägen im Pilgerschrittverfahren auf den Scheibenoberflächen gebildet werden, abgelesen.

Darüber hinaus bewirkt die thermische Trägheit des Materials der Festlager eine zeitliche Verzögerung des Eintritts der oszillierenden axialen Bewegung der Loslager im Vergleich mit der sie auslösenden oszillierenden Komponente des Temperaturprofils. Diese Verzögerung wird zweckmäßigerweise ebenfalls berücksichtigt, vorzugsweise indem sie experimentell ermittelt wird. So kann in einem Testschnitt bei bekannten Positionen der Zustellung des Werkstücks die Temperaturvorgabe für die Festlager-Temperierung geändert werden und an einer erhaltenen Scheibe gemessen werden, bei welcher tatsächlichen Schnitttiefe sich die geänderte Temperaturvorgabe als Änderung im Formprofil der Scheibe ausgewirkt hat. Basierend auf einer solchen Messung wurde auch im von Fig.7 repräsentierten Beispiel die zeitliche Verzögerung des Eintritts der oszillierenden axialen Bewegung der Loslager berücksichtigt.

Mit der Ausgestaltung des Korrekturprofils 41 wurden beide Verzögerungen berücksichtigt. Dementsprechend ist der Verlauf des Korrekturprofils so verschoben, dass die durch die im Temperaturprofil 28 vorgegebenen Temperaturwechsel bewirkte zusätzliche kurzwellige Modulation des Formprofils der erhaltenen Halbleiterscheiben zeit- und schnitttiefen-genau ausgeglichen wurde. Die Amplitude der auf die Temperaturwechsel reagierenden Komponente des Korrekturprofils ergab sich aus der zuvor bestimmen drahtsägespezifischen Proportionalitätskonstanten (in µm/°C), die den Zusammenhang zwischen Temperaturänderung (in °C) und dadurch bewirkter Formprofiländerung (in µm) abbildet.

Das oszillierende axiale Bewegen der Loslager durch Temperieren der Festlager mittels einer Vielzahl von paarweisen Wechseln aus Heizen und Kühlen wird nachfolgend als WGTO (Wire-Guide Temperature Oscillation) bezeichnet. Die Anwendung von WGTO ist bevorzugt, da eine Drahtsäge in der Regel ohnehin eine Drahtführungsrollen-Lagerkühlung besitzt und WGTO sich somit ohne konstruktive Änderungen an bestehenden Drahtsägen umsetzen lässt. An Stelle von WGTO kann das damit angestrebte oszillierende Bewegen der Loslager auch durch Stellelemente bewirkt werden, beispielsweise mittels piezoelektrischer, hydraulischer, pneumatischer oder elektromechanischer Stellelemente, insbesondere mittels Tauchspulen-Aktuatoren ("voice coil actuator").

Das Verschieben des Werkstücks entlang der Werkstückachse gemäß der Vorgabe eines Korrekturprofils während des Durchtritts des Werkstücks durch das Drahtgatter erfolgt vorzugsweise mittels eines piezoelektrischen Stellelements. Ein solches Verschieben wird nachfolgend als IPPC (Ingot-Position Piezo Control) bezeichnet. Es ist bevorzugt, IPPC anzuwenden, um damit das Formprofil einer Scheibe zu verbessern. Das Verschieben des Werkstücks entlang der Werkstückachse gemäß der Vorgabe eines Korrekturprofils kann jedoch auch durch Stellelemente bewirkt werden, die beispielsweise thermisch, hydraulisch, pneumatisch oder elektromechanisch arbeiten.

Während der Herstellung einer Halbleiterscheibe mit dem Formprofil 33 gemäß Fig. 7 wurden die Festlager nach Maßgabe des Temperaturprofils 28 temperiert. Das Temperaturprofil verlangte bis zum Erreichen der maximalen Schnitttiefe von 301 mm eine Anzahl von 20 paarweise Temperaturwechsel aus Kühlen und Erhitzen mit Amplituden von ±3 °C relativ zu einer mittleren Temperatur. Bei einer Dauer des Abtrennvorgangs von 13 h (= 780 min) betrug das Temperatur-Bandbreiten-Produkt 3 °C × 20 / 780 min ≈ 0,08° C/min.

Die Amplitude der Temperaturwechsel beträgt vorzugsweise nicht weniger als ±0,5 °C, um abrupte Wechsel von Haftreibung zu Gleitreibung im Zuge einer axialen Bewegung der Loslager verlässlich zu unterdrücken, und vorzugsweise nicht mehr als ±10 °C. Höhere Amplituden sind wegen der zeitlichen Verzögerung, mit der die vom Temperaturwechsel ausgelöste Wärmeausdehnung eintritt, technisch kaum umsetzbar. Außerdem hat die Wärmeausdehnung bei größeren Amplituden nichtlineare Anteile, deren Wirkung sich mit einem Korrekturprofil nicht mehr vorhersagbar ausgleichen lässt.

Die Anzahl der paarweisen Temperaturwechsel, die ein Temperaturprofil vorgeben sollte, beträgt vorzugsweise mindestens 10 Paare aus Kühlen und Erhitzen im Verlauf des Durchtritts des Werkstücks durch das Drahtgatter, also vom Einschnitt in das Werkstück bis zum Erreichen der Gesamtschnitttiefe. Diese Mindestanzahl reicht in der Regel aus, um abrupte Wechsel von Haftreibung zu Gleitreibung im Zuge einer axialen Bewegung der Loslager verlässlich zu unterdrücken. Die Anzahl der paarweisen Temperaturwechsel während der Dauer des Durchtritts des Werkstücks durch das Drahtgatter ist wegen der Wärmekapazität und der damit einhergehenden Trägheit der beeinflussten thermischen Massen nach oben hin begrenzt. Bei mehr als zwei Paaren aus Kühlen und Erhitzen je Minute lassen sich abrupte Wechsel von Haftreibung zu Gleitreibung im Zuge einer axialen Bewegung der Loslager kaum noch vermeiden.

Das Temperatur-Bandbreitenprodukt beträgt vorzugsweise nicht weniger als 0,025 °C/min und nicht mehr als 4 °C/min, besonders bevorzugt nicht weniger als 0,1 °C/min und nicht mehr als 1 °C/min.

Das erfindungsgemäße Verfahren wurde mit Erfolg auch bei Folgeschnitten eingesetzt, bei denen die Anwendung von WGTO Temperaturwechsel mit Amplituden von ±3 °C, eine Anzahl von 160 Paaren aus Kühlen und Erhitzen während einer Schnittdauer von 13 h (= 780 min) vorsah, so dass das Temperatur-Bandbreitenprodukt 3 °C x 160/780 min = 0,615/min betrug.

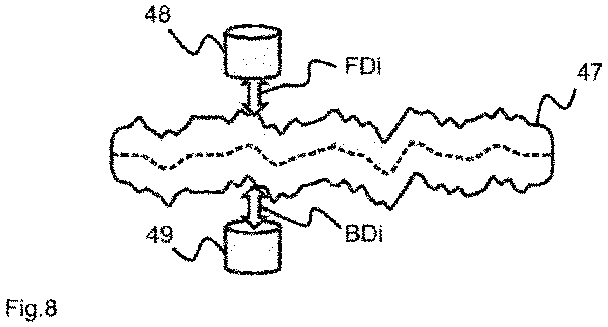

Fig.8 bis Fig.11 machen deutlich, wie Formprofile bestimmt werden und zeigen den Zusammenhang von Formprofil und zugehöriger formprofilbezogener Komponente des Korrekturprofils.

Fig.8 zeigt die Anordnung einer Scheibe 47 in einer Messvorrichtung zum Bestimmen des Dickenprofils und des Formprofils der Scheibe. Dafür wird die Scheibe entlang der Schnitttiefe zwischen dem oberen Sensor 48 und dem unteren Sensor 49 horizontal bewegt. Die Sensoren messen die Abstände FDi und BDi an Messpunkten i, die bestimmten Schnitttiefen-Positionen entsprechen. Der Abstand FDi bezeichnet den Abstand des oberen Sensors 48 zu der ihm gegenüberliegenden Vorderseite der Scheibe 47 und BDi den Abstand des unteren Sensors 49 zu der ihm gegenüberliegenden Rückseite der Scheibe 47.

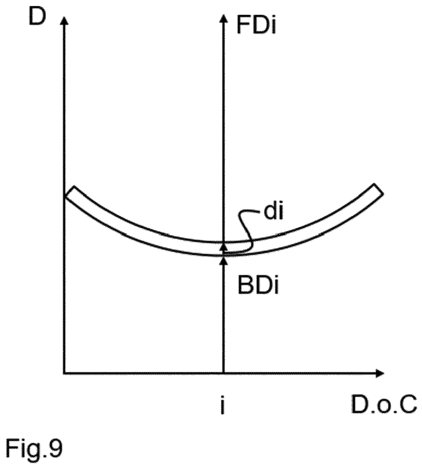

Fig.9 zeigt eine vergleichbare Situation für eine Scheibe mit konkaver Form, wobei auf die Darstellung der Sensoren verzichtet wurde. Der Abstand D bezeichnet den Abstand zwischen den Sensoren. Der Abstand di bezeichnet die Dicke der Scheibe am Messpunkt i, die mittels der bereits erwähnten Berechnungsvorschrift ermittelt werden kann. Analog dazu lassen sich die Messwerte für das Formprofil der Scheibe berechnen, wobei die weitere, bereits erwähnte Berechnungsvorschrift angewendet wird.

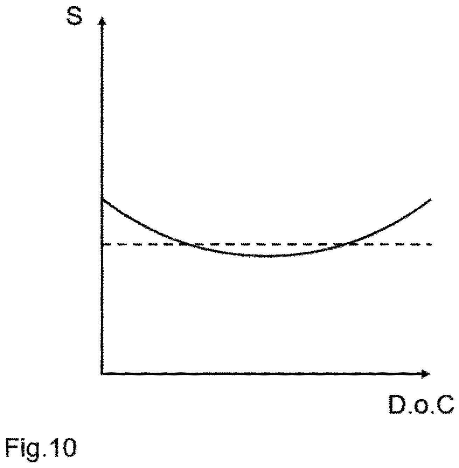

Fig. 10 zeigt das entsprechende Formprofil (durchgezogene Kurve) der Scheibe von Fig.9 und das Formprofil einer Referenzscheibe (gestrichelte Linie).

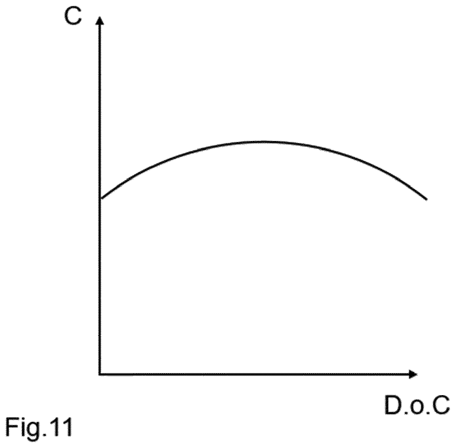

In Fig.11 ist das Korrekturprofil mit formprofilbezogener Komponente dargestellt, die vom Formprofil von Fig. 10 abgeleitet ist. Sie ist proportional zur Differenz der Formprofile der Scheibe und der Referenzscheibe.

## Patentansprüche

1. Verfahren zum Abtrennen einer Vielzahl von Scheiben von Werkstücken mittels einer Drahtsäge während einer Abfolge von Abtrennvorgängen, die in Initialschnitte und erste und zweite Folgeschnitte untergliedert sind, wobei die Drahtsäge ein Drahtgatter aus sich bewegenden Drahtabschnitten eines Sägedrahts und eine Stellvorrichtung umfasst, und das Drahtgatter in einer Ebene zwischen zwei Drahtführungsrollen gespannt ist, wobei jede der zwei Drahtführungsrollen zwischen einem Festlager und einem Loslager gelagert ist, das Verfahren umfassend
während eines jeden der Abtrennvorgänge mittels der Stellvorrichtung das Zustellen des jeweiligen Werkstücks durch das Drahtgatter entlang einer Zustellrichtung senkrecht zu einer Werkstückachse und senkrecht zur Ebene des Drahtgatters in Gegenwart einer Arbeitsflüssigkeit und von Hartstoffen, die abrasiv auf das Werkstück einwirken, **gekennzeichnet durch**
während eines jeden der Abtrennvorgänge das oszillierende axiale Bewegen der Loslager der zwei Drahtführungsrollen; und
das Zustellen des Werkstücks durch das Drahtgatter unter gleichzeitigem Verschieben des Werkstücks entlang der Werkstückachse mittels eines Stellelements gemäß der Vorgabe eines Korrekturprofils, das eine oszillierende Komponente umfasst, die der Wirkung entgegengerichtet ist, die das axiale Bewegen der Loslager auf die Form der abgetrennten Scheiben hat.

2. Verfahren nach Anspruch 1, **dadurch gekennzeichnet, dass** das Korrekturprofil im Fall eines jeden der Initialschnitte eine erste formprofilbezogene Komponente mitumfasst, die proportional zur Differenz eines ersten Durchschnittsformprofils und des Formprofils einer Referenzscheibe ist, und das erste Durchschnittsformprofil von Scheiben bestimmt wird, die im Verlauf eines oder mehrerer Initialschnitte einer vorausgegangenen Abfolge von Abtrennvorgängen abgetrennt wurden.

3. Verfahren nach Anspruch 1 oder Anspruch 2, **dadurch gekennzeichnet, dass** das Korrekturprofil im Fall eines jeden der ersten Folgeschnitte eine zweite formprofilbezogene Komponente mitumfasst, die proportional zur Differenz eines zweiten Durchschnittsformprofils und des Formprofils der Referenzscheibe ist, und das zweite Durchschnittsformprofil von Scheiben bestimmt wird, die im Verlauf eines oder mehrerer der Initialschnitte der Abfolge abgetrennt wurden.

4. Verfahren nach einem der Ansprüche 1 bis 3, **dadurch gekennzeichnet, dass** das Korrekturprofil im Fall eines jeden der zweiten Folgeschnitte eine dritte formprofilbezogene Komponente mitumfasst, die proportional zur Differenz eines dritten Durchschnittsformprofils und des Formprofils der Referenzscheibe ist, und das dritte Durchschnittsformprofil von Scheiben bestimmt wird, die von mindestens 1 bis 5 Abtrennvorgängen der Abfolge stammen, die dem jeweiligen zweiten Folgeschnitt unmittelbar vorangegangen sind.

5. Verfahren nach einem der Ansprüche 1 bis 4, **dadurch gekennzeichnet, dass** das Stellelement piezoelektrisch, hydraulisch, pneumatisch, elektromechanisch oder thermisch arbeitet.

6. Verfahren nach einem der Ansprüche 1 bis 5, **dadurch gekennzeichnet, dass** das oszillierende axiale Bewegen der Loslager mittels weiterer Stellelemente bewirkt wird, die an den Festlagern eingreifen und piezoelektrisch, hydraulisch, pneumatisch oder elektromechanisch arbeiten.

7. Verfahren nach einem der Ansprüche 1 bis 5, **dadurch gekennzeichnet, dass** das oszillierende axiale Bewegen der Loslager durch Temperieren der Festlager mit einer Kühlflüssigkeit bewirkt wird, indem die Kühlflüssigkeit einer Vielzahl an Paaren von Wechseln aus Kühlen und Erhitzen relativ zu einer mittleren Temperatur unterzogen wird.

8. Verfahren nach Anspruch 7, **dadurch gekennzeichnet, dass** im Zuge der Wechsel eine Temperaturänderung der Kühlflüssigkeit herbeigeführt wird, deren Amplitude relativ zur mittleren Temperatur nicht weniger als 0,5 °C und nicht mehr als 10 °C beträgt.

9. Verfahren nach Anspruch 8, **dadurch gekennzeichnet, dass** das Produkt aus der Amplitude der Temperaturänderung und dem Kehrwert der Zeitabstände der Wechsel nicht weniger als 0,025 °C/min und nicht mehr als 4 °C/min beträgt.

10. Verfahren nach Anspruch 9, **dadurch gekennzeichnet, dass** das Produkt nicht weniger als 0,1 °C/min und nicht mehr als 1 °C/min beträgt.

11. Verfahren nach einem der Ansprüche 7 bis 10, **dadurch gekennzeichnet, dass** während des Durchtritts des Werkstücks durch das Drahtgatter mindestens 10 Paare von Wechseln aus Kühlen und Erhitzen der Kühlflüssigkeit vorgenommen werden.

12. Verfahren nach einem der Ansprüche 1 bis 11, **gekennzeichnet durch** das Bestimmen des ersten, zweiten und dritten Durchschnittsformprofils basierend auf einer scheibenbezogenen Auswahl von Scheiben.

13. Verfahren nach einem der Ansprüche 1 bis 11, **gekennzeichnet durch** das Bestimmen des zweiten und dritten Durchschnittsformprofils basierend auf einer schnittbezogenen Auswahl von Scheiben.

14. Verfahren nach einem der Ansprüche 1 bis 11, **gekennzeichnet durch** das Bestimmen des zweiten und dritten Durchschnittsformprofils basierend auf einer scheibenbezogenen und einer schnittbezogenen Auswahl von Scheiben.

15. Verfahren nach einem der Ansprüche 1 bis 14, **gekennzeichnet durch** das Bestimmen des ersten, zweiten und dritten Durchschnittsformprofils basierend auf einer gewichteten Mittelwertbildung des Formprofils von Scheiben.

16. Verfahren nach einem der Ansprüche 1 bis 15, **dadurch gekennzeichnet, dass** beim Konfigurieren des Korrekturprofils eine drahtsägespezifische Proportionalitätskonstante und eine Durchbiegung der Drahtabschnitte berücksichtigt werden.

17. Verfahren nach einem der Ansprüche 1 bis 16, **dadurch gekennzeichnet, dass** der Sägedraht ein übereutektischer perlitischer Stahldraht ist und einen Durchmesser von 70 bis 175 µm aufweist.

18. Verfahren nach einem der Ansprüche 1 bis 17, **dadurch gekennzeichnet, dass** der Sägedraht eine Struktur aufweist, die eine Vielzahl von Ausstülpungen und Einbuchtungen senkrecht zur Drahtlängsachse umfasst.

19. Verfahren nach einem der Ansprüche 1 bis 17, **gekennzeichnet durch** das Zuführen eines Kühlschmiermittels als Arbeitsflüssigkeit zu den Drahtabschnitten während eines jeden der Abtrennvorgänge, wobei die Hartstoffe aus Diamant bestehen und auf der Oberfläche des Sägedrahts durch galvanische Bindung, durch Kunstharzbindung oder durch formschlüssige Bindung fixiert sind, und das Kühlschmiermittel frei von Stoffen ist, die abrasiv auf das Werkstück einwirken.

20. Verfahren nach einem der Ansprüche 1 bis 18, **gekennzeichnet durch** das Zuführen der Arbeitsflüssigkeit in Form einer Aufschlämmung der Hartstoffe in Glycol oder Öl zu den Drahtabschnitten während eines jeden der Abtrennvorgänge, wobei die Hartstoffe aus Siliciumcarbid bestehen.

21. Verfahren nach einem der Ansprüche 1 bis 20, **gekennzeichnet durch** das Bewegen des Sägedrahts in einer fortgesetzten Abfolge von Paaren von Richtungsumkehrungen, wobei ein Paar von Richtungsumkehrungen jeweils ein erstes Bewegen des Sägedrahts in eine erste Drahtlängsrichtung um eine erste Länge und ein zweites nachfolgendes Bewegen des Sägedrahts in ein zweite Drahtlängsrichtung um eine zweite Länge umfasst, die zweite Drahtlängsrichtung der ersten Drahtlängsrichtung entgegengesetzt ist, und die erste Länge größer als die zweite Länge ist.

22. Verfahren nach Anspruch 21, **dadurch gekennzeichnet, dass** der Sägedraht beim Bewegen in die erste Drahtlängsrichtung um die erste Länge dem Drahtgatter mit einer ersten Zugkraft aus einem ersten Drahtvorrat zugeführt wird und beim Bewegen in die zweite Drahtlängsrichtung um die zweite Länge dem Drahtgatter mit einer weiteren Zugkraft aus einem zweiten Drahtvorrat zugeführt wird, wobei die weitere Zugkraft geringer als die erste Zugkraft ist.

23. Verfahren nach einem der Ansprüche 1 bis 22, **dadurch gekennzeichnet, dass** das Werkstück aus einem Halbleitermaterial besteht.
